# EUROPÄISCHE PATENTSCHRIFT

(11) **EP 2 844 444 B1**
(45) Veröffentlichungstag und Bekanntmachung des Hinweises auf die Patenterteilung: **06.01.2021**
(21) Anmeldenummer: 13726870.2
(22) Anmeldetag: 12.04.2013
(51) Int. Cl.: B29B 7/40, B29B 7/76, B29B 7/80, B29B 7/82, B01F 15/00, B01F 7/00

(54) **VORRICHTUNG ZUM HERSTELLEN EINES MEHRKOMPONENTENGEMISCHES**
DEVICE FOR PRODUCING A MULTICOMPONENT MIXTURE
DISPOSITIF DESTINÉ À LA PRÉPARATION D'UN MÉLANGE À PLUSIEURS COMPOSANTS

(30) Priorität: 03.05.2012 DE 102012103885
(43) Veröffentlichungstag der Anmeldung: 11.03.2015
(73) Patentinhaber: Henkel AG & Co. KGaA, 40589 Düsseldorf (DE)
(72) Erfinder: METZLER, Mario, A-6890 Lustenau (AT); SCHWABL, Christian, A-6900 Bregenz (AT)
(86) Internationale Anmeldenummer: PCT/IB2013/052931
(87) Internationale Veröffentlichungsnummer: WO 2013/164719

(56) Entgegenhaltungen:
- EP-A1- 0 649 717
- EP-A2- 0 723 843
- EP-A2- 1 375 008
- EP-A2- 1 992 465
- DE-A1- 2 530 018
- US-A- 3 026 183
- US-A- 3 362 919

## Beschreibung

Die Erfindung betrifft eine Vorrichtung zum Herstellen eines Mehrkomponentengemisches, mit einer von einer Kammerwandung umgebenen Mischkammer, die einen Auslaß für das Mehrkomponentengemisch aufweist, einem in der Kammerwandung angeordneten Temperierkanalsystem zum Kühlen oder Erwärmen des in der Mischkammer befindlichen Gemisches, wobei in die Mischkammer wenigstens zwei Komponentenventile und mindestens ein Spülventil einmünden.

Aus der EP 0 649 717 A1 ist eine Vorrichtung bekannt, die dazu dient, mindestens zwei Komponenten eines Kunststoffgemisches miteinander zu vermischen, um hierdurch eine reaktive Kunststoffmischung herzustellen, die dann über den Auslaß der Mischkammer abgegeben wird. Bei solchen Mehrkomponenten-Kunststoffgemischen kann es sich beispielsweise um reaktive Klebstoffe, Dichtungsmaterialien, Vergußmassen o. dgl. handeln, wobei die Vermischung der Komponenten in der Mischkammer durch darin angebrachte statische Leitbleche erfolgen kann, bevorzugt jedoch ein mechanisch angetriebener Rührer in der Mischkammer vorgesehen ist, der die über die Komponentenventile in die Mischkammer eingespritzten Kunststoffkomponenten innig miteinander vermischt.

Um die Mischkammer bei Bedarf reinigen zu können, wurde mit dem vorgenannten Stand der Technik eine Hochdruck-Wasserspülung der Mischkammer vorgeschlagen, wozu unter hohem Druck stehendes Spülwasser bei Bedarf über das Spülventil in die Mischkammer eingespritzt wird, wobei das mit hoher Geschwindigkeit auf die Wand der Mischkammer und das darin aufgenommene Rührelement des mechanischen Rühres auftreffende Wasser diese Bauteile von den sich daran ablagernden Resten des Mehrkomponentengemisches befreit. Das mit diesen Resten verunreinigte Spülwasser gelangt über den Auslaß aus der Mischkammer wieder heraus und wird in einer nachgeschalteten Reinigung von den Verunreinigungen getrennt, bevor es entweder im Kreislauf zurück oder in die Kanalisation abgeleitet wird.

Um das Reaktionsverhalten des Mehrkomponentengemisches bzw. von dessen Komponenten gezielt beeinflussen zu können, ist vorgeschlagen worden, eine Temperiermöglichkeit zu schaffen, womit insbesondere eine Kühlung, bei Bedarf ggf. auch eine Erwärmung der Mischkammer möglich ist. Ein wesentliches Problem hierbei besteht in der Forderung nach einer möglichst kompakt bauenden Vorrichtung, denn der die Mischkammer aufweisende Mischkopf muss häufig unter beengten Platzverhältnissen relativ zu einem Bauteil bewegt werden, um beispielsweise an diesem eine Dichtung im FiPFG-Verfahren (formed in place formed gasget) anzuformen. Zwar gibt es Vorschläge, Vorrichtungen der hier betroffenen Art durch Kühlmanschetten o. dgl. zu temperieren, die außen an die Wandung der Mischkammer angelegt werden. Diese Vorschläge haben sich aber als nicht übermäßig effektiv erwiesen, insbesondere ist es mit den bislang gemachten Vorschlägen schwierig, eine möglichst gleichmäßige Temperierung der Mischkammer auch im Bereich des oder der Spülventile zu erreichen.

Aus der US 3,026,183 A1 ist eine gattungsgemäße Vorrichtung bekannt, bei der die Komponentenventile auch als Spülventile dienen. Zur Temperierung der Mischkammer sind in der Kammerwandung Bohrungen vorgesehen, durch die hindurch als Temperierflüssigkeit ein Thermoöl geleitet werden kann, das durch im Mischkopf vorgesehene Leitungen strömt, um den Mischkopf auf Temperatur zu halten. Für die Rückspülung der Mischkammer gibt es einen vom ölführenden Heizkreislauf streng getrennten Spülkreislauf, mit dem Spülflüssigkeit in die Mischkammer eingeleitet werden kann.

Aus der US 3,362,919 A1 ist eine Vorrichtung durch Durchführung eines Verfahrens zum Aufschäumen von warmaushärtenden organischen Materialien bekannt, die einen doppelwandigen Mischkopf mit einem zwischen den beiden Wandungen ausgebildeten Temperiersystem hat. In die im Mischkopf ausgebildete Mischkammer mündet eine Leitung, die durch beide Wandungen des Mischkopfes hindurchgeführt ist und dabei das Temperiersystem durchsetzt, ohne mit diesem in Verbindung zu stehen.

Aufgabe der Erfindung ist es, eine Vorrichtung der eingangs genannten Art dahingehend weiterzubilden, dass sowohl eine Temperierung als auch eine Spülung der Mischkammer mit Wasser bei besonders kompakter Bauweise der Vorrichtung möglich ist.

Diese Aufgabe wird mit der Erfindung kennzeichnend dadurch gelöst, dass das Spülventil einlassseitig in Verbindung mit dem in der Kammerwandung zugeordneten Temperierkanalsystem ist, das von Wasser durchströmbar ist, um zugleich auch das für die Spülung/Reinigung der Mischkammer erforderliche Spülwasser über das Temperierkanalsystem zu dem Spülventil gelangen zu lassen und bei dessen Betätigung durch dieses hindurch in die Mischkammer einzuspritzen.

Die Erfindung hat den besonderen Vorteil, dass das in der Kammerwandung selbst ausgebildete Temperierkanalsystem nicht nur zum Kühlen (oder ggf. Erwärmen) des in der Mischkammer befindlichen Gemisches dient, sondern zugleich auch das für die Spülung/Reinigung der Mischkammer erforderliche Spülwasser über dasselbe Kanalsystem zu dem Spülventil gelangt und bei dessen Betätigung durch dieses hindurch in die Mischkammer eingespritzt werden kann. Diese Doppelnutzung des Leitungssystems sowohl für die Temperierung der Mischkammer als auch für die Zufuhr von Spülflüssigkeit zum Spülventil gestattet nicht nur eine besonders kompakte Bauform der Vorrichtung, sondern ermöglicht es auch, eine sehr gleichmäßige Temperierung der Mischkammer auch im Bereich der Spülventile zu erreichen, da die durch das Temperierkanalsystem strömende (Kühl-) Flüssigkeit eben auch das Spülventil beaufschlagt und dieses bzw. den es umgebenden Bereich der Kammerwandung auf die gewünschte Temperatur einstellt.

Um die Spülung der Mischkammer und der darin aufgenommenen Komponenten, insbesondere des darin wirksamen Rührers, in der bevorzugt angestrebten Weise unter hohem Druck bewirken zu können, ist vorzugsweise vorgesehen, dass das Temperierkanalsystem einen Hochdruck-Wasseranschluss aufweist. Das Temperierkanalsystem hat bevorzugt mindestens einen Zulaufanschluss und mindestens einen Ablaufanschluss für Kühl- bzw. Heizwasser, wobei die Anordnung so getroffen sein kann, dass der Zulaufanschluss oder insbesondere der Ablaufanschluss von dem Hochdruck-Wasseranschluss gebildet wird. In diesem Fall kann das Kühl- oder Heizwasser unter dem hohen, für die Reinigung der Mischkammer vorgesehenen Druck der Spülflüssigkeit im Temperierkanalsystem strömen und eine Reinigung der Mischkammer ist praktisch zu jedem Zeitpunkt durch einfaches Öffnen des Spülventils möglich. Aus energetischen Gründen jedoch ist eine derartige Anordnung meist nur dann sinnvoll, wenn die Mischkammer sehr häufig, also in kurzen zeitlichen Abständen gespült werden muss. In den meisten Fällen ist es bevorzugt, wenn der Zulaufanschluss oder der Ablaufanschluss gegenüber dem Hochdruck-Wasseranschluss mittels mindestens eines oder ggf auch mehreren Rückschlag- oder Sperrventils/-ventilen separierbar ist. In diesem Fall kann die für die Temperierung der Mischkammer durch das Temperierkanalsystem strömende Flüssigkeit beispielsweise mittels einer Umwälzpumpe mit geringem Überdruck gepumpt werden, der lediglich so groß sein muss, dass die im Umlauf auftretenden Druckverluste kompensiert werden. Der für die Rückspülung erwünschte hohe Flüssigkeitsdruck wird dann erst bei Bedarf unmittelbar vor einem Spülvorgang aufgebaut, wobei die für die Umwälzung der Kühl- bzw. Heizflüssigkeit und weitere im Kühlkreislauf insbesondere außerhalb der eigentlichen Mischvorrichtung befindlichen Bauelemente des Kühlkreislaufes aufgrund des vorgesehenen Rückschlag- oder Sperrventils von dem hohen Spüldruck nicht beaufschlagt werden.

Als Spülventile haben sich Nadelventile bewährt, die vorzugsweise mittels Druckluft betätigt werden können. Für eine möglichst gleichmäßige Temperierung der Mischkammer hat es sich als vorteilhaft erwiesen, wenn das Temperierkanalsystem mehrere über den Umfang der Mischkammer verteilt in der Kammerwandung angeordnete, die Wandung von oben nach unten bzw. unten nach oben durchsetzende Kanalabschnitte aufweist, durch die die Temperierflüssigkeit, vorzugsweise abwechselnd von oben nach unten und unten nach oben, strömt. Hierfür kann die Anordnung dann so getroffen sein, dass die Kammerwandung eine mittels einer Abdeckung abgedeckte Stirnseite aufweist, wobei in der Stirnseite oder der Abdeckung eine oder mehrere über den Umfang oder über Umfangsabschnitte der Mischkammer sich erstreckende(r) Wasserkanal/-kanäle ausgebildet ist/sind, von dem/denen Wasserbohrungen in der Wandung abzweigen. Dabei können die Wasserbohrungen beispielsweise unter einem vorzugsweise stumpfen Winkel zur Stirnseite in der Kammerwandung verlaufen, wobei je zwei oder mehrere Wasserbohrungen an ihrem der Stirnseite abgewandten Ende miteinander in Verbindung sind. Konstruktiv weiterhin von Vorteil ist es dann, wenn die Wasserbohrungen mit ihren der Stirnseite abgewandten Enden in eine oder mehrere Vorkammern münden und dass mindestens eine Vorkammer mindestens ein Spülventil einlassseitig beaufschlagt.

Wie bereits oben angedeutet, ist es im Allgemeinen vorteilhaft, dass das das Temperierkanalsystem durchströmende Wasser in einem Kreislauf umläuft und dass der Kreislauf einen Vorratsbehälter, eine Heiz- oder Kühlvorrichtung und eine Umwälzpumpe für das Wasser aufweist, wobei bei dieser Ausgestaltung bevorzugt im Kreislauf ein oder mehrere schaltbare(s) Absperrventil(e) und/oder ein oder mehrere Rückschlagventil(e) angeordnet ist/sind, womit die im Kühlkreislauf angeordneten Komponenten - mit Ausnahme der die Mischkammer umgebenden, insbesondere in der Kammerwandung ausgebildeten Wasserkanäle - vom Hochdruckanschluss abgesperrt werden können, so dass der bei einer Rückspülung auftretende hohe Wasserdruck die Komponenten des Kühl- oder Heizkreislaufes nicht beaufschlagt.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert und dargestellt ist. Es zeigt:
- **Fig. 1**: eine erfindungsgemäße Mischvorrichtung zum Herstellen eines Mehrkomponentenggemisches in einer perspektivischen Darstellung;

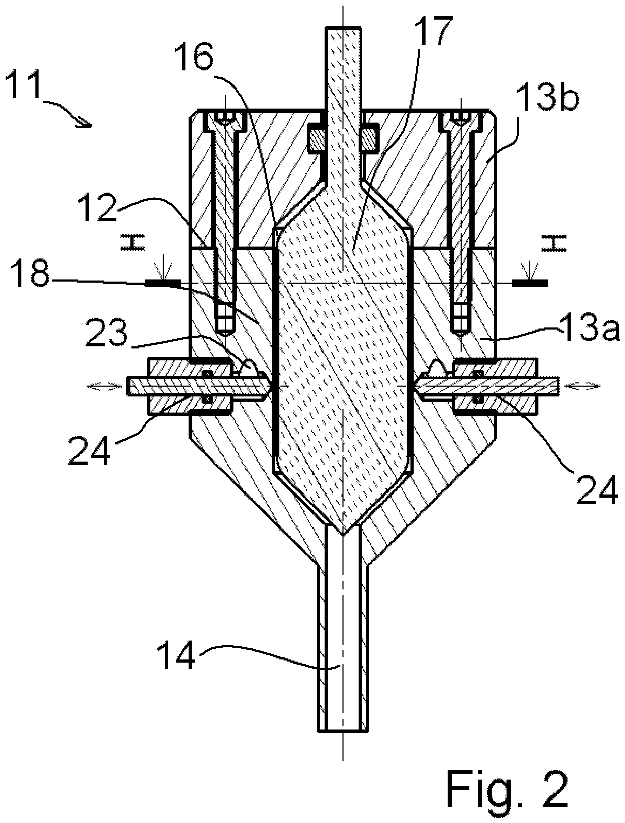

- **Fig. 2**: den Gegenstand der Fig. 1 in einem Vertikalschnitt;
- **Fig. 3**: den Gegenstand der Fig. 1 und 2 in einem Horizontalschnitt längs der Linie H-H;
- **Fig. 4**: den Gegenstand der Fig. 3 in einem Schnitt längs der Linie I-I; und
- **Fig. 5**: ein Fließschema zur Illustration des Kühl- und Rückspülkreislaufs durch die Vorrichtung der Fig. 1 bis 4.

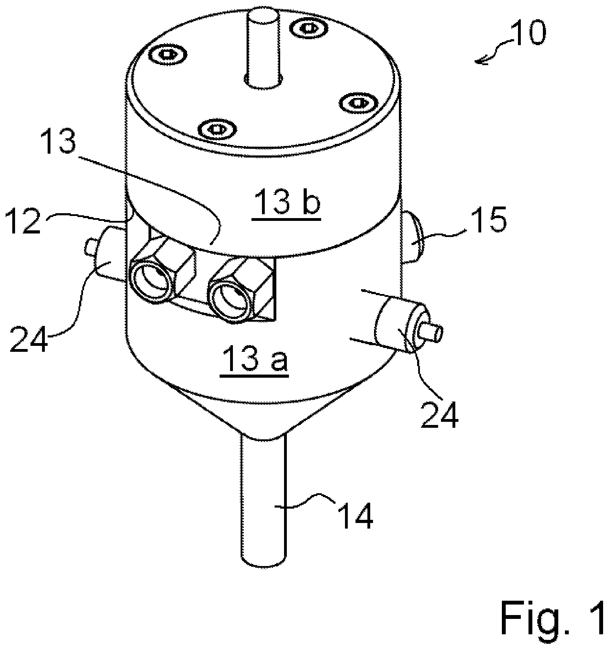

Fig. 1 zeigt eine insgesamt mit 10 bezeichnete Vorrichtung zum Herstellen eines Mehrkomponentengemisches, insbesondere eines Gemisches aus zwei miteinander chemisch reagierenden KunststoffKomponenten zur Herstellung eines aufschäumenden Kunststoffmaterials, das beispielsweise zur Herstellung einer Dichtung unmittelbar an einem (nicht dargestellten) Bauteil aufgetragen werden kann.

Die Vorrichtung 10 besteht hierzu im Wesentlichen aus einem beispielsweise von einem Roboter handhabbaren Mischkopf 11 mit einem längs einer horizontalen Teilungsebene 12 geteilten, zweiteiligen Gehäuse 13, wobei das Gehäuseunterteil 13a oben von einer Abdeckung 13b verschlossen ist und einen Auslass 14 sowie zwei Komponentenventile 15 aufweist, durch die zu vermischenden Komponenten in eine im Inneren des Gehäuses 13 ausgebildete Mischkammer 16 eingebracht werden. In der Mischkammer 16 werden die (Kunststoff) Komponenten mittels eines drehbar angetriebenen Rührorgans 17 miteinander vermischt, wobei das Rührorgan axial verstellbar in der Mischkammer aufgenommen ist und hierdurch den Auslass 14 freigeben oder verschließen kann, wie dies bekannt ist.

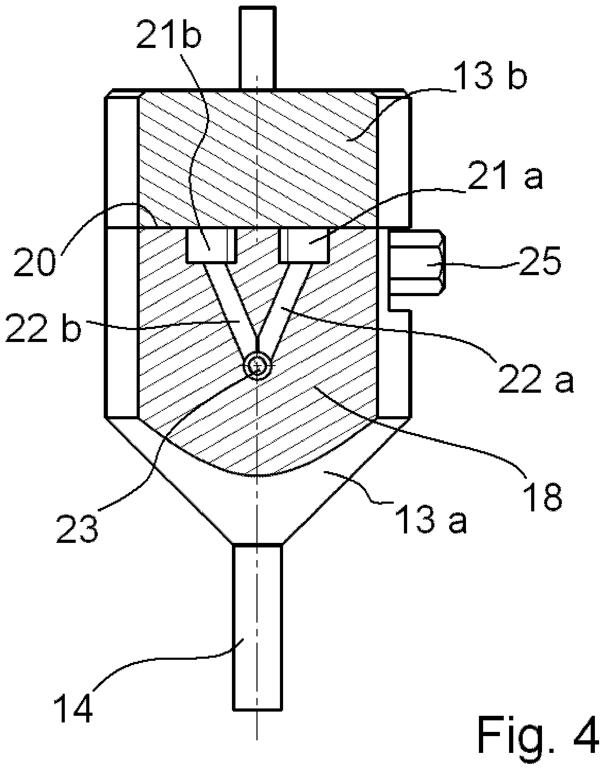

Die Mischkammer 16 ist rundherum von einer Kammerwandung 18 des Gehäuses 13 umgeben, die ein Temperierkanalsystem 19 hat, das von Wasser durchströmbar ist, um den Mischkopf 11 und damit das in der Mischkammer gemischte Komponentengemisch zu temperieren, insbesondere zu kühlen. Dieses Temperierkanalsystem 19 wird im Wesentlichen von in der oberen Stirnseite 20 des Gehäuseunterteils 13a eingefrästen, insgesamt vier bogenförmig über einen Winkel von eta 45 ° verlaufenden Wasserkanälen 21 und aus schräg in das Gehäuseunterteil 13a unter einem stumpfen Winkel von dessen oberer Stirnseite gebohrten Wasserbohrungen 22 gebildet, wobei jeweils zwei einander benachbarte Wasserbohrungen, die von benachbarten Wasserkanälen nach unten abzweigen, an ihren unteren Enden miteinander in Verbindung sind, wie dies am besten in der Fig. 4 zu erkennen ist. Hierzu münden die Wasserbohrungen mit ihren der oberen Stirnseite des Gehäuseunterteils abgewandten Enden jeweils in eine Vorkammer 23. Auf zwei einander gegenüberliegenden Seiten des Gehäuses 13 sind zwischen den dort ausgebildeten Vorkammern 23 und der Mischkammer 16 Spülventile 24 in Form von Nadelventilen angeordnet, bei deren Öffnung eine Flüssigkeitsverbindung zwischen dem Temperierkanalsystem 19 und der Mischkammer 16 hergestellt werden kann.

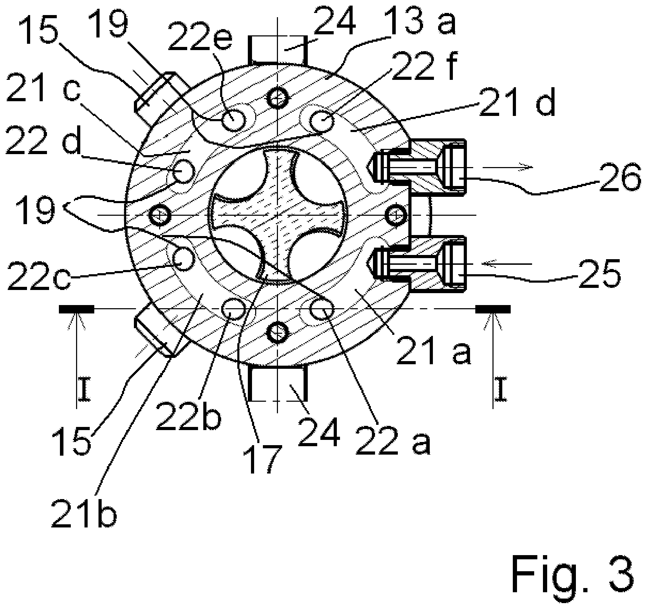

Wie sich aus einer Zusammenschau insbesondere der Fig. 3 und 4 erkennen lässt, kann das Temperierkanalsystem insbesondere zur Kühlung der Vorrichtung von Wasser durchströmt werden, das über einen am oberen Gehäuserand des Gehäuseunterteils 13a angeordneten Zulaufanschluss 25 zunächst in einen ersten Wasserkanal 21a eintritt und von diesem in eine erste Wasserbohrung 22a gelangt, um durch diese nach unten in eine erste der Vorkammern 23 zu gelangen, von der aus eines der beiden Spülventile 24 zur Mischkammer 16 hin abzweigt. Das Wasser strömt im normalen Temperierbetrieb von dieser ersten Vorkammer 23 durch die nächste Wasserbohrung 22b wieder nach oben und tritt in den zweiten Wasserkanal 21b ein, an dessen anderen Ende wieder eine Umlenkung nach unten in die Wasserbohrung 22c, von deren unteren Ende dann wieder nach oben durch die Wasserbohrung 22d und am Ende des sich anschließenden dritten Wasserkanals 22c wiederum nach unten durch die Bohrung 22e in die nächste Vorkammer 23 strömt, von der aus das zweite Spülventil 24, das in der Fig. 4 angedeutet ist, zur Mischkammer hin abzweigt. Von dort strömt das Wasser wiederum aufwärts durch eine letzte Wasserbohrung 22f und gelangt in den letzten der vier Wasserkanäle 21d und von dort in einen Ablaufanschluss 26.

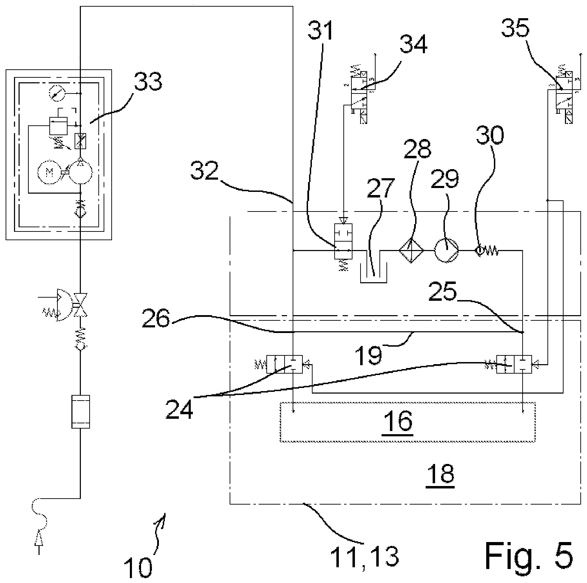

Der Wasserkreislauf ist mehr im Detail in Fig. 5 dargestellt. Man erkennt, dass das für die Temperierung, insbesondere die Kühlung des Mischkopfes dienende Kühlwasser aus einem Wassersammelbehälter 27 entnommen wird, dann zunächst einen Kühler 28 durchläuft, in dem es abgekühlt wird, bevor es dann von einer Umwälzpumpe 29 über ein Rückschlagventil 30 zu dem Zulaufanschluss 25 gelangt, um anschließend, wie vorstehend beschrieben, durch das Temperierkanalsystem 19 im Mischkopf 11 zu strömen. Hinter dem Ablaufanschluss 26 ist in dem Kühlwasserkreislauf ein schaltbares Absperrventil 31 vorgesehen, das im Kühlbetrieb geöffnet ist und in diesem Schaltzustand von dem vom Ablaufanschluss 26 kommenden Kühlwasser durchströmt wird, bevor dieses in den Wassersammelbehälter 27 zurückgelangt.

An dem Ablaufanschluss 26 ist über ein zwischen diesem und dem Absperrventil 31 angeschlossenes T-Stück eine HochdruckWasserleitung 32 angeflanscht, über die von einem Hochdruck-Pumpenaggregat 33 zur Verfügung gestelltes Spülwasser zur Reinigung der Mischkammer 16 und des darin angeordneten Rührorgans 17 zugeführt werden kann. Für die Rückspülung wird zunächst das Absperrventil 31 über ein Vorsteuerventil 34 mittels Druckluft betätigt, um den Kühlwasserkreislauf zwischen dem Ablaufanschluss 26 und dem Wassersammelbehälter 27 zu unterbrechen. Während das HochdruckPumpenaggregat 33 das für die Reinigung der Mischkammer vorgesehene Spülwasser unter dem gewünschten hohen Druck am Ablaufanschluss und damit tatsächlich im Wesentlichen im gesamten Temperierkanalsysten 19 bis hin zu dem Rückschlagventil 30 zur Verfügung hält, werden die beiden Spülventile 24 von einem zweiten Vorsteuerventil 35 mittels Druckluft geöffnet, so dass das unter hohem Druck im Temperierkanalsystem stehende Spülwasser durch die Spülventile 24 hindurch in die Mischkammer eingespritzt wird. Das Spülwasser tritt dabei mit sehr hoher Geschwindigkeit auf das Rührelement in der Mischkammer und die Mischkammerwand auf und schält die Verunreinigungen in Form von bereits ausreagiertem oder teilweise ausreagiertem Kunststoffgemisch vom Rührelement und der Mischkammerwand ab. Das verunreinigte Spülwasser kann durch den während des Spülvorgangs offenen Auslass 14 austreten und wird anschließend aufgefangen und in bekannter Weise gereinigt. Ein Austreten von unter Hochdruck stehendem Spülwasser durch den Zulaufanschluss wird automatisch verhindert durch das Rückschlagventil 30, das ein Zurückströmen von Wasser durch die Umlaufpumpe und den Kühler unterbindet.

Bei Beendigung des Spülvorgangs durch Abschalten des Hochdruck-Pumpenaggregats 33 werden die Spülventile noch für einen kurzen Moment offen gehalten, damit sich der Restdruck in der Hochdruckwasserleitung abbauen kann. Nach Schließen der Spülventile 24 öffnet sich das Absperrventil 31 zwischen dem Ablaufanschluss und dem Wassersammelbehälter wieder und das Kühlwasser kann von der Umwälzpumpe wieder durch das Temperierkanalsystem gepumpt werden, um den Mischkopf auf der gewünschten Betriebstemperatur zu halten.

Man erkennt, dass es mit lediglich einem Wasserkanalsystem in der die Mischkammer 16 umgebenden Kammerwandung 18 des Mischkopfes 11 erfindungsgemäß gelungen ist, nicht nur für die gewünschte Temperierung der Vorrichtung Sorge zu tragen, sondern auch in besonders raumsparender und effektiver Weise eine Hochdruck-Wasserspülung zur Reinigung der Mischkammer und des darin aufgenommenen Rührorgans zu gewährleisten.

Die Erfindung ist nicht auf das dargestellte und beschriebene Ausführungsbeispiel beschränkt, sondern es sind verschiedene Änderungen oder Ergänzungen denkbar, ohne den Rahmen der Erfindung zu verlassen. Beispielsweise ist eine andere Art der Wasserführung für das Kühlwasser denkbar, beispielsweise indem der Mischkopf zweifach horizontal geteilt ist und ein Mittelteil hat, das sich bevorzugt über die Höhe der Mischkammer erstreckt und in dem in Axialrichtung verlaufende Wasserbohrungen in der Kammerwandung angeordnet sind, die oben und unten in jeweils gemeinsame Verteil- und Sammelkanäle münden. Bei dieser Ausführungsform werden dann alle Wasserbohrungen in gleicher Richtung durchströmt, so dass das Kühlwasser über den gesamten Umfang des Mischkopfes immer im Wesentlichen dieselbe Temperatur hat und sich nur auf dem vergleichsweise kurzen Weg durch die Wasserbohrungen geringfügig erwärmt, bevor es wieder aus dem Mischkopf abgezogen und zu einem externen Wärmetausch transportiert wird. Anstelle von lediglich zwei Spülventilen können auch drei oder mehr Spülventile zum Einsatz kommen, wobei diese zweckmäßig gleichmäßig über den Umfang des Mischkopfes verteilt angeordnet sind.

Soweit in der Beschreibung der Erfindung von Wasser (Spülwasser bzw. Kühlwasser) die Rede ist, soll hierunter im Sinne der Erfindung nicht zwingend reines Wasser verstanden werden, sondern es ist auch möglich, dass dem Wasser Reinigungszusätze oder andere Zusätze hinzugefügt sein können, die beispielsweise die Oberflächenspannung des Wassers herabsetzen, die Benetzung verbessern und/oder ein Ausfällen von Kalk/Kesselstein in den Kühlkanälen und an den Ventilen verhindern.

## Patentansprüche

1. Vorrichtung zum Herstellen eines Mehrkomponentengemisches, mit einer von einer Kammerwandung (18) umgebenen Mischkammer (16), die einen Auslass (14) für das Mehrkomponentengemisch aufweist, einem in der Kammerwandung (18) angeordneten Temperierkanalsystem (19) zum Kühlen oder Erwärmen des in der Mischkammer befindlichen Gemisches, wobei in die Mischkammer (16) wenigstens zwei Komponentenventile (15) und mindestens ein Spülventil (24) einmünden, **dadurch gekennzeichnet, dass** das Spülventil (24) einlassseitig in Verbindung mit dem in der Kammerwandung (18) angeordneten Temperierkanalsystem (19) ist, das von Wasser durchströmbar ist, um zugleich auch das für die Spülung/Reinigung der Mischkammer (16) erforderliche Spülwasser über das Temperierkanalsystem (19) zu dem Spülventil (24) gelangen zu lassen und bei dessen Betätigung durch dieses hindurch in die Mischkammer (16) einzuspritzen.

2. Vorrichtung nach Anspruch 1, **dadurch gekennzeichnet, dass** das Temperierkanalsystem (19) in der Kammerwandung (18) ausgebildet ist.

3. Vorrichtung nach Anspruch 1 oder 2, **dadurch gekennzeichnet, dass** das Temperierkanalsystem (19) einen Hochdruck-Wasseranschluss aufweist.

4. Vorrichtung nach einem der Ansprüche 1 bis 3, **dadurch gekennzeichnet, dass** das Temperierkanalsystem (19) mindestens einen Zulauf- (25) und mindestens einen Ablaufanschluss (26) für Kühl- bzw. Heizwasser aufweist.

5. Vorrichtung nach Anspruch 4, **dadurch gekennzeichnet, dass** der Zulaufanschluss (25) oder der Ablaufanschluss (26) von dem Hochdruck-Wasseranschluss gebildet wird.

6. Vorrichtung nach Anspruch 4, **dadurch gekennzeichnet, dass** der Zulaufanschluss (25) und/oder der Ablaufanschluss (26) gegenüber dem Hochdruck-Wasseranschluss mittels mindestens eines oder mehreren Rückschlag- oder Sperrventils/-ventilen (30, 31) separierbar ist.

7. Vorrichtung nach einem der Ansprüche 1 bis 6, **dadurch gekennzeichnet, dass** das Spülventil (24) als vorzugsweise druckluftbetätigtes Nadelventil ausgestaltet ist.

8. Vorrichtung nach einem der Ansprüche 1 bis 7, **dadurch gekennzeichnet, dass** das Temperierkanalsystem (19) mehrere über den Umfang der Mischkammer (16) verteilt in der Kammerwandung (18) angeordnete, die Wandung von oben nach unten bzw. unten nach oben durchsetzende Kanalabschnitte oder -bohrungen (22) aufweist.

9. Vorrichtung nach einem der Ansprüche 1 bis 8, **dadurch gekennzeichnet, dass** die Kammerwandung (18) eine mittels einer Abdeckung (13a) abgedeckte Stirnseite aufweist, wobei in der Stirnseite oder der Abdeckung (13a) ein oder mehrere über den Umfang oder Umfangsabschnitte der Mischkammer (16) sich erstreckende (r) Wasserkanal/-kanäle (21) ausgebildet ist/sind, von dem/denen Wasserbohrungen (22) in der Wandung (18) abzweigen.

10. Vorrichtung nach Anspruch 9, **dadurch gekennzeichnet, dass** die Wasserbohrungen (22) unter einem vorzugsweise stumpfen Winkel zur Stirnseite in der Kammerwandung (18) verlaufen und je zwei oder mehrere Wasserbohrungen (22) an ihrem der Stirnseite abgewandten Ende miteinander in Verbindung sind.

11. Vorrichtung nach Anspruch 9 oder 10, **dadurch gekennzeichnet, dass** die Wasserbohrungen (22) mit ihren der Stirnseite abgewandten Enden in eine oder mehrere Vorkammer(n) (23) münden und dass mindestens eine Vorkammer (23) mindestens ein Spülventil (24) einlassseitig beaufschlagt.

12. Vorrichtung nach einem der Ansprüche 1 bis 11, **dadurch gekennzeichnet, dass** das das Temperierkanalsystem (19) durchströmende Wasser in einem Kreislauf umläuft und dass der Kreislauf einen Vorratsbehälter (27), eine Heiz- oder Kühlvorrichtung (28) und eine Umwälzpumpe (29) für das Wasser aufweist.

13. Vorrichtung nach Anspruch 12, **dadurch gekennzeichnet, dass** im Kreislauf ein oder mehrere schaltbare(s) Absperrventile (31) und/oder ein oder mehrere Rückschlagventile (30) angeordnet ist/sind.

## Claims

1. A device for preparing a multicomponent mixture, comprising a mixing chamber (16) which is surrounded by a chamber wall (18) and has an outlet (14) for the multicomponent mixture, and a temperature control channel system (19) which is arranged in the chamber wall (18) and is intended for cooling or heating the mixture located in the mixing chamber, at least two component valves (15) and at least one flushing valve (24) opening into the mixing chamber (16), **characterized in that** the flushing valve (24) is connected, on the inlet side, to the temperature control channel system (19) arranged in the chamber wall (18), through which temperature control channel system water can flow in order to simultaneously also allow the flushing water required for flushing/cleaning the mixing chamber (16) to arrive at the flushing valve (24) via the temperature control channel system (19) and, when the flushing valve is actuated, inject said water through said valve into the mixing chamber (16).

2. The device according to claim 1, **characterized in that** the temperature control channel system (19) is formed in the chamber wall (18).

3. The device according to claim 1 or 2, **characterized in that** the temperature control channel system (19) has a high-pressure water connection.

4. The device according to one of claims 1 to 3, **characterized in that** the temperature control channel system (19) has at least one inlet connection (25) and at least one outlet connection (26) for water used for cooling or heating.

5. The device according to claim 4, **characterized in that** the inlet connection (25) or the outlet connection (26) is formed by the high-pressure water connection.

6. The device according to claim 4, **characterized in that** the inlet connection (25) and/or the outlet connection (26) can be separated from the high-pressure water connection by means of at least one or more non-return or shut-off valves (30, 31).

7. The device according to one of claims 1 to 6, **characterized in that** the flushing valve (24) is designed as a needle valve that is preferably actuated by compressed air.

8. The device according to one of claims 1 to 7, **characterized in that** the temperature control channel system (19) has a plurality of channel portions or bores (22) which are arranged in the chamber wall (18) so as to be distributed over the circumference of the mixing chamber (16) and which extend through the wall from top to bottom or from bottom to top.

9. The device according to one of claims 1 to 8, **characterized in that** the chamber wall (18) has an end face covered by a cover (13a), one or more water channels (21) which extend over the circumference or circumferential portions of the mixing chamber (16) being formed in the end face or the cover (13a), from which channels water bores (22) branch off in the wall (18).

10. The device according to claim 9, **characterized in that** the water bores (22) extend in the chamber wall (18) at a preferably obtuse angle relative to the end face, and two or more water bores (22) are connected to one another in each case at the end thereof that is remote from the end face.

11. The device according to claim 9 or 10, **characterized in that** the ends of the water bores (22) that are remote from the end face lead into one or more prechambers (23), and **in that** at least one prechamber (23) acts on at least one flushing valve (24) on the inlet side.

12. The device according to one of claims 1 to 11, **characterized in that** the water flowing through the temperature control channel system (19) circulates in a circuit, and **in that** the circuit has a storage container (27), a heating or cooling device (28) and a circulating pump (29) for the water.

13. The device according to claim 12, **characterized in that** one or more switchable shut-off valves (31) and/or one or more non-return valves (30) are arranged in the circuit.

## Revendications

1. Dispositif de préparation d'un mélange à plusieurs composants, comportant une chambre de mélange (16) entourée par une paroi de chambre (18) et présentant une sortie (14) destinée au mélange à plusieurs composants, un système de canaux de thermorégulation (19) disposé dans la paroi de chambre (18) et permettant de refroidir ou de chauffer le mélange se trouvant dans la chambre de mélange, au moins deux vannes de composants (15) et au moins une vanne de rinçage (24) débouchant dans la chambre de mélange (16), **caractérisé en ce que** la vanne de rinçage (24) est reliée côté admission au système de canaux de thermorégulation (19) disposé dans la paroi de chambre (18), lequel système de canaux de thermorégulation peut être traversé par l'eau afin de permettre simultanément à l'eau de rinçage nécessaire au rinçage/nettoyage de la chambre de mélange (16) d'atteindre la vanne de rinçage (24) par l'intermédiaire du système de canaux de thermorégulation (19) et, lorsque la vanne de rinçage est activée, d'injecter à travers celle-ci dans la chambre de mélange (16).

2. Dispositif selon la revendication 1, **caractérisé en ce que** le système de canaux de thermorégulation (19) est formé dans la paroi de chambre (18).

3. Dispositif selon la revendication 1 ou 2, **caractérisé en ce que** le système de canaux de thermorégulation (19) présente un raccord d'eau à haute pression.

4. Dispositif selon l'une des revendications 1 à 3, **caractérisé en ce que** le système de canaux de thermorégulation (19) présente au moins un raccord d'entrée (25) et au moins un raccord de sortie (26) destinés à l'eau de refroidissement ou de chauffage.

5. Dispositif selon la revendication 4, **caractérisé en ce que** le raccord d'entrée (25) ou le raccord de sortie (26) est formé par le raccord d'eau à haute pression.

6. Dispositif selon la revendication 4, **caractérisé en ce que** le raccord d'entrée (25) et/ou le raccord de sortie (26) peuvent être séparés du raccord d'eau à haute pression au moyen d'au moins une ou plusieurs vanne(s) anti-retour ou d'arrêt (30, 31).

7. Dispositif selon l'une des revendications 1 à 6, **caractérisé en ce que** la vanne de rinçage (24) est conçue de préférence comme une vanne à pointeau actionnée par l'air comprimé.

8. Dispositif selon l'une des revendications 1 à 7, **caractérisé en ce que** le système de canaux de thermorégulation (19) présente plusieurs sections ou alésages de canal (22) réparti(e)s sur la circonférence de la chambre de mélange (16), disposé(e)s dans la paroi de chambre (18) et pénétrant dans la paroi de haut en bas ou de bas en haut.

9. Dispositif selon l'une des revendications 1 à 8, **caractérisé en ce que** la paroi de chambre (18) présente une face frontale recouverte par un couvercle (13a), un ou plusieurs canal/canaux d'eau (21) s'étendant sur la circonférence ou sur des sections de la circonférence de la chambre de mélange (16) étant formé(s) dans la face frontale ou dans le couvercle (13a), à partir duquel/desquels canal/canaux d'eau des alésages d'eau (22) se ramifient dans la paroi (18).

10. Dispositif selon la revendication 9, **caractérisé en ce que** les alésages d'eau (22) sont orientés à un angle de préférence obtus par rapport à la face frontale dans la paroi de chambre (18) et **en ce que** deux ou plusieurs alésages d'eau (22) sont reliés entre eux à leur extrémité détournée de la face frontale.

11. Dispositif selon la revendication 9 ou 10, **caractérisé en ce que** les alésages d'eau (22) débouchent, avec leurs extrémités détournées de la face frontale, dans une ou plusieurs préchambres (23) et **en ce qu'**au moins une préchambre (23) sollicite au moins une vanne de rinçage (24) côté admission.

12. Dispositif selon l'une des revendications 1 à 11, **caractérisé en ce que** l'eau traversant le système de canaux de thermorégulation (19) s'écoule dans un circuit et **en ce que** le circuit présente un réservoir de stockage (27), un dispositif de chauffage ou de refroidissement (28) et une pompe de circulation (29) destinés à l'eau.

13. Dispositif selon la revendication 12, **caractérisé en ce qu'**une ou plusieurs vannes d'arrêt commutables (31) et/ou une ou plusieurs vannes anti-retour (30) sont disposées dans le circuit.
